Europäisches Patentamt

**European Patent Office**

Office européen des brevets

(19)

(11) Numéro de publication : **0 112 787
B1**

(12) **FASCICULE DE BREVET EUROPÉEN**

(45) Date de publication du fascicule du brevet :
16.04.86

(51) Int. Cl.⁴ : **F 02 F 3/04**, F 02 F 3/00,
**F 16 J 9/22, C 22 C 1/04**

(21) Numéro de dépôt : **83420184.0**

(22) Date de dépôt : **06.12.83**

(54) **Inserts pour pistons de moteurs Diesel en alliages d'aluminium-silicium ayant une résistance à chaud et une usinabilité améliorées.**

(30) Priorité : **08.12.82 FR 8220892**

(43) Date de publication de la demande :
**04.07.84 Bulletin 84/27**

(45) Mention de la délivrance du brevet :
**16.04.86 Bulletin 86/16**

(84) Etats contractants désignés :
**CH DE GB IT LI**

(56) Documents cités :
EP-A- 0 029 087
EP-A- 0 100 470
FR-A- 2 343 895
FR-A- 2 354 451
US-A- 3 265 493
US-A- 3 285 717
US-A- 3 325 279

(73) Titulaire : **CEGEDUR SOCIETE DE TRANSFORMA-
TION DE L'ALUMINIUM PECHINEY**
**23, Rue Balzac**
**F-75008 Paris (FR)**

(72) Inventeur : **Huret, Noel**
**63 Boucle de la Nacelle Les Richardets**
**F-93160 Noisy-le-Grand (FR)**
Inventeur : **Meunier, Jean**
**5, rue Casimir Périer**
**F-38000 Grenoble (FR)**

(74) Mandataire : **Vanlaer, Marcel et al**
**PECHINEY 28, rue de Bonnel**
**F-69433 Lyon Cédex 3 (FR)**

**0 112 787**

**Description**

La présente invention concerne des inserts pour pistons de moteurs DIESEL en alliages d'aluminium-silicium contenant 12 à 25 % de silicium obtenus par la métallurgie des poudres et possédant à la fois une résistance à chaud et une usinabilité améliorées, ainsi qu'une bonne aptitude au frottement.

Il est bien connu que, dans le domaine de l'automobile, les constructeurs, par souci d'économie de combustible, se tournent de plus en plus vers l'utilisation de matériaux légers. C'est ainsi que l'aluminium et ses alliages prennent chaque jour une place plus importante au détriment des matériaux ferreux beaucoup plus denses.

En ce qui concerne le moteur en particulier, il est maintenant fréquent de recourir à des alliages d'aluminium-silicium pour la confection des pièces soumises à des frottements telles que les chemises et les pistons, car il est connu que le silicium est un élément qui possède une très grande résistance à l'usure. Ces alliages contiennent généralement d'autres éléments comme le cuivre, le magnésium, le nickel, le cobalt qui contribuent à améliorer certaines de leurs caractéristiques mécaniques et/ou des lubrifiants : graphite, bisulfure de molybdène, par exemple.

Mais, la tendance actuelle chez les constructeurs de DIESEL notamment est d'augmenter les puissances spécifiques des moteurs, de sorte que les matériaux qui les composent sont exposés à des efforts thermiques de plus en plus élevés. C'est le cas en particulier de certaines pièces rapportées ou inserts qui équipent les pistons pour constituer soit la gorge du segment de feu et le bord supérieur du piston, soit la chambre de combustion et dont la température peut atteindre 400 °C.

Dans ces conditions, il s'avère que les alliages d'aluminium-silicium tels que les A-S12UN, les AS18UNG, les A-S22UNK utilisés avec succès jusqu'alors pour la fabrication de ces inserts présentent une résistance mécanique amoindrie qui, par dégradation dans le temps, devient insuffisante.

Pour parer à cet inconvénient sans se priver des avantages incontestables de légèreté et d'aptitude au frottement que procurent les alliages d'aluminium-silicium, l'homme de l'art a cherché à améliorer leur résistance à chaud en y incorporant d'autres éléments. C'est ainsi, par exemple, que le brevet US-A-3.285.717 décrit un alliage d'aluminium-silicium (12 à 30 % Si) dans lequel on obtient une résistance à chaud améliorée par ajout de 10 à 30 % de cuivre, 2 à 6 % de manganèse et jusqu'à 6 % de fer. Mais, ces alliages nécessitent des quantités relativement importantes de cuivre et de manganèse.

C'est alors que la demanderesse tout en reconnaissant l'effet bénéfique du fer, a trouvé qu'en combinant ledit fer présent en concentration comprise entre 2 et 8 % en poids à un nouvel élément, le zirconium, elle obtenait un effet exacerbé du fer sur la résistance à chaud de l'alliage d'aluminium. C'est la fourchette de concentration en poids de zirconium comprise entre 0,2 et 1,5 % qui s'est révélée la plus efficace.

Toutefois, l'effet de ces additions est atteint seulement lorsqu'elles donnent bien des précipités de phases fines et homogènes. Pour y parvenir, la demanderesse a été amenée, en raison de la faible solubilité du fer dans l'aluminium, à recourir à des procédés de solidification rapide, c'est-à-dire ceux qui sont basés sur l'obtention de métal à l'état divisé et qu'on regroupe généralement sous la dénomination de métallurgie des poudres.

Ainsi, l'alliage d'aluminium-silicium auquel on a ajouté au préalable le fer et le zirconium, est fondu et porté à une température supérieure à 900 °C de manière à éviter tout phénomène de précipitation prématurée, puis traité dans des dispositifs convenables qui en assurent la division en particules. Cette dernière peut être réalisée par pulvérisation fine obtenue par atomisation à l'aide d'un gaz, ou par atomisation mécanique suivie d'une solidification dans un gaz (air, hélium, argon). On obtient ainsi des poudres de granulométrie inférieure à 400 μm. Mais, la solidification peut aussi se faire à des vitesses plus élevées que dans le cas de l'atomisation par projection de l'alliage fondu contre une surface métallique refroidie, d'où résulte la formation de paillettes d'épaisseur inférieure à 100 μm. Les particules ainsi fabriquées sont alors comprimées à froid et/ou à chaud puis filées et/ou forgées à chaud de façon à obtenir l'alliage à l'état compact à partir duquel sont confectionnés les inserts.

En examinant de plus près les mesures de résistance à chaud des alliages ainsi préparés, la demanderesse a constaté certaines disparités qui lui ont permis de mettre en évidence l'influence de la granulométrie et de l'épaisseur des particules sur la finesse des précipités et, par conséquent, sur la résistance mécanique à chaud. En effet, plus la vitesse de refroidissement est grande, plus les particules sont petites ou minces et leur surface spécifique développée et, par suite, plus la finesse des précipités s'accroît. Cette relation a d'ailleurs été vérifiée par un examen micrographique. Il en résulte que, suivant le degré d'amélioration de la résistance à chaud qu'on désire atteindre, on sélectionne les particules en procédant à une coupe granulométrique ou en jouant sur la vitesse de refroidissement.

Poursuivant son étude sur le rôle joué par les particules, la demanderesse a également mis en évidence le fait que pour les alliages hypereutectiques, la taille des grains de silicium primaire évolue également dans le même sens que les dimensions des particules, c'est-à-dire que, plus les particules sont petites, plus les grains de silicium le sont aussi. Or, il est connu que la facilité d'usinage des alliages d'aluminium-silicium s'accroît avec la finesse des grains de silicium.

Ainsi, la présente invention concourt-elle à améliorer simultanément la résistance à chaud et l'usinabilité des alliages fabriqués.

Dans ces conditions, les inserts de pistons obtenus par métallurgie des poudres présentent une

2

résistance à des températures comprise entre 350 à 400 °C, nettement supérieure à celle observée avec des alliages fabriqués par coulée, tels que, par exemple, l'A-U6MT choisi en raison de ses performances remarquables du point de vue de sa tenue à chaud.

Un alliage selon l'invention, dans lequel figurent les deux éléments fer et zirconium, a notamment pour propriété de présenter une résistance à chaud qui n'évolue pratiquement pas dans le temps, même après un maintien de 500 heures à 350 °C.

De plus, d'autres éléments à faible solubilité et diffusivité dans l'aluminium tels que le nickel, le cobalt, le cérium, le molybdène, le chrome, le titane, le vanadium, par exemple, ont une influence favorable sur les propriétés recherchées et peuvent être utilisés soit en substitution au zirconium, soit en combinaison avec ce dernier à des concentrations en poids ne dépassant pas 2 % pour chacun d'eux.

L'invention peut être illustrée au moyen de l'exemple d'application suivant : un lingot d'alliage du type A-S25UN G $Fe_3Zr$, de composition en poids suivante :

| | |
|---|---|
| Fe | 2,80 % |
| Si | 22,10 % |
| Cu | 1,07 % |
| Ni | 1,05 % |
| Zr | 0,59 % |
| Mg | 0,80 % |

a été fondu et atomisé dans l'air à une température comprise entre 950 °C et 1 000 °C. On a recueilli une poudre dont 90 % au moins de la masse avait une granulométrie inférieure à 400 μm et qui présentait à l'examen micrographique une structure beaucoup plus fine et homogène que dans le cas de la coulée.

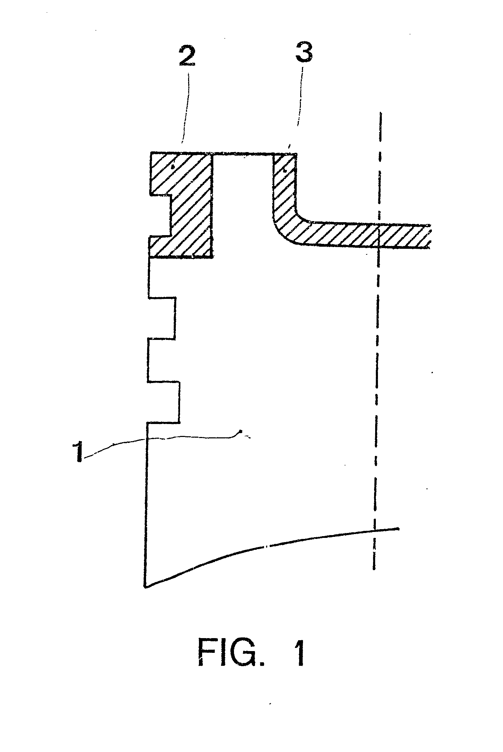

Cette poudre a été partagée en deux lots de granulométrie 400-180 μm et 63-20 μm que l'on a comprimés séparément et à froid en lopins dans le conteneur de diamètre 95 mm d'une presse. Ceux-ci ont été traités thermiquement puis filés à chaud dans une gamme de température voisine de 350 °C, découpés et usinés, pour donner finalement les inserts selon l'invention et qu'on peut illustrer à l'aide de la figure 1 jointe à la présente invention.

Celle-ci présente une coupe par un plan passant par l'axe d'un demi-piston (1) dans la masse duquel sont placés des inserts (2) formant la gorge du segment de feu et le bord supérieur du piston et (3) formant la chambre de combustion.

Ces inserts ont été soumis à des examens micrographiques, à des tests d'usinabilité et de frottement et à des essais de traction.

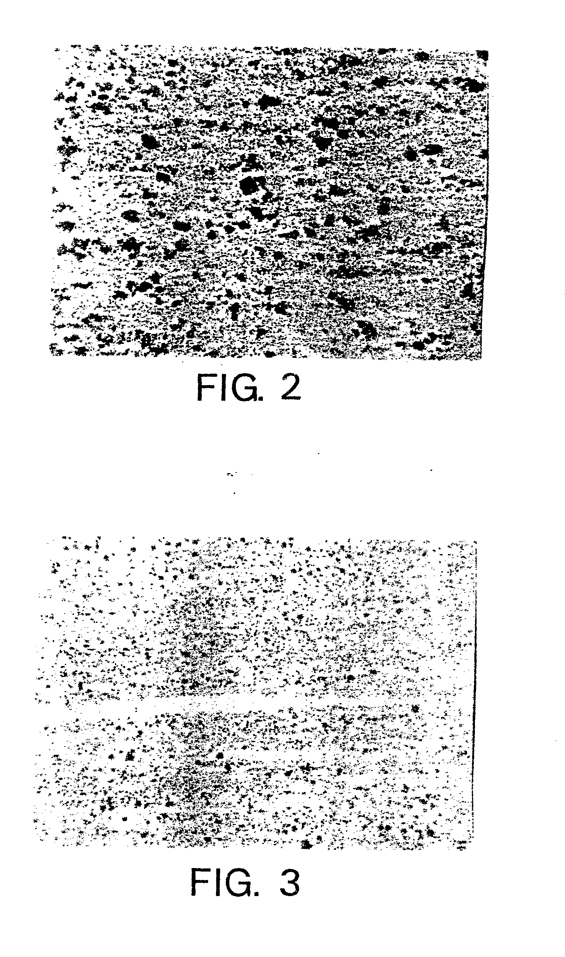

Les examens micrographiques, sous un grossissement de 400, sont matérialisés notamment par les photos correspondant aux figures 2 et 3 qui accompagnent la présente demande. On peut voir sur la figure 2 un produit obtenu à partir de la poudre de granulométrie 400-180 μm, dans lequel apparaissent des particules de silicium primaire dont les dimensions sont inférieures à 10 μm ; par contre, sur la figure 3, relative à la poudre 63-20 μm, ces particules sont plus fines et de dimensions inférieures à 5 μm. Des examens au microscope électronique mettent également en évidence une plus grande finesse des phases riches en fer dans le cas de la poudre 63-20 μm.

Les tests d'usinabilité non chiffrés ici confirment l'effet bénéfique des poudres de granulométrie fine sur les possibilités d'usinabilité de l'alliage.

Les tests de frottement montrent également que l'aptitude au frottement de ces alliages à chaud est améliorée par l'ajout de fer et/ou de zirconium et/ou des autres éléments.

Des essais de traction ont été effectués dans le sens long et à 350 °C sur les produits maintenus respectivement pendant une heure et cinq cents heures à cette température, et on a mesuré dans les deux cas à la fois la résistance à 0,2 % d'allongement : R 0,2, et la résistance maximum : Rm. Parallèlement, pour comparaison, les mêmes mesures ont été faites sur un alliage A-U6MT élaboré par coulée puis filage et dont on sait qu'il possède une remarquable résistance à chaud.

Le tableau suivant rend compte de ces essais :

| Alliage | Granulométrie en μm | Température de traitement : 350 °C | | | |
|---|---|---|---|---|---|
| | | Maintien : 1 h | | Maintien : 500 h | |
| | | R 0,2 MPa | Rm MPa | R 0,2 MPa | Rm MPa |
| A–S25UN G Fe₃Zr0,6 | 450–180 | 55 | 92 | 71 | 93 |
| | 63– 20 | 76 | 107 | 81 | 113 |
| A–U6MT | coulé | 79 | 111 | 36 | 58 |

On constate que l'alliage selon l'invention a une résistance à chaud après un maintien de une heure à 350 °C comparable à celle de l'A-U6MT. Cette résistance ne se dégrade pas lors d'un maintien prolongé à cette température pendant cinq cents heures alors que, par contre, la résistance de l'A-U6MT est réduite de moitié.

Ce tableau montre également que la résistance est meilleure lorsque la poudre utilisée a une granulométrie plus fine.

La présente invention trouve son application dans la confection, dans de meilleures conditions d'usinabilité, d'inserts de pistons de moteurs destinés à travailler à des températures élevées pendant de longues périodes et possédant à la fois une résistance améliorée et stable dans le temps, et une bonne aptitude au frottement. Ils conviennent particulièrement bien aux pistons de moteurs DIESEL.

**Revendications**

1. Inserts pour pistons de moteurs DIESEL en alliages d'aluminium-silicium contenant 12 à 25 % de silicium, obtenus par métallurgie des poudres et possédant à la fois une résistance à chaud et une usinabilité améliorées ainsi qu'une bonne aptitude au frottement, caractérisés en ce qu'ils contiennent entre 2 et 8 % en poids de fer et entre 0,2 et 1,5 % en poids de zirconium.

2. Inserts selon la revendication 1, caractérisés en ce qu'ils contiennent au moins un élément appartenant au groupe constitué par le cérium, le molybdène, le chrome, le nickel, le titane, le vanadium et le cobalt.

3. Inserts selon la revendication 2, caractérisés en ce qu'ils contiennent moins de 2 % en poids de chacun de ces éléments.

**Claims**

1. Inserts for Diesel engine pistons of aluminium-silicon alloys containing from 12 to 25 % of silicon, which are produced by powder metallurgy and which have both enhanced thermal resistance and enhanced machinability as well as a good frictional capability characterised in that they contain between 2 and 8 % by weight of iron and between 0.2 and 1.5 % by weight of zirconium.

2. Inserts according to claim 1 characterised in that they contain at least one element belonging to the group formed by cerium, molybdenum, chromium, nickel, titanium, vanadium and cobalt.

3. Inserts according to claim 2 characterised in that they contain less than 2 % by weight of each of said elements.

**Patentansprüche**

1. Einsatzstücke für Dieselmotorkolben aus 12 bis 25 % Silizium enthaltenden Aluminium-Silizium-Legierungen, die durch Pulvermetallurgie erhalten sind und gleichzeitig verbesserte Warmfestigkeit und Bearbeitbarkeit sowie eine gute Eignung für reibende Bewegung besitzen, dadurch gekennzeichnet, daß sie zwischen 2 und 8 Gew.% Eisen und zwischen 0,2 und 1,5 Gew.% Zirkonium enthalten.

2. Einsatzstücke nach dem Anspruch 1, dadurch gekennzeichnet, daß sie wenigstens ein Element enthalten, das zu der durch das Cer, das Molybdän, das Chrom, das Nickel, das Titan, das Vanadium und das Kobalt gebildeten Gruppe gehört.

3. Einsatzstücke nach Anspruch 2, dadurch gekennzeichnet, daß sie weniger als 2 Gew.% jedes dieser Elemente enthalten.

FIG. 1

FIG. 2

FIG. 3